# EUROPÄISCHE PATENTSCHRIFT

(11) **EP 0 955 531 B1**
(45) Veröffentlichungstag und Bekanntmachung des Hinweises auf die Patenterteilung: **11.06.2003**
(21) Anmeldenummer: 99108017.7
(22) Anmeldetag: 23.04.1999
(51) Int. Cl.: G01M 3/24

(54) **Messonde für Wasserversorgungsnetze und Verfahren zur Leckerkennung**
Measurement probe for water distribution network and leak detection method
Sonde de mesure pour réseau de distribution d'eau et procédé de détection de fuites

(30) Priorität: 29.04.1998 DE 19819258
(43) Veröffentlichungstag der Anmeldung: 10.11.1999
(73) Patentinhaber: Martinek, Peter, 6845 Hohenems (AT)
(72) Erfinder: Martinek, Peter, 6845 Hohenems (AT)
(74) Vertreter: Menges, Rolf, Dipl.-Ing.

(56) Entgegenhaltungen:
- EP-B- 0 009 263
- DE-A- 19 528 287
- US-A- 5 272 646

## Beschreibung

Die Erfindung betrifft ein Verfahren zur Durchführung von Messungen für die Feststellung von Wasserverlusten und die Ortung der Leckstellen in Wasserversorgungssystemen unter Einsatz von Meßsonden sowie eine Meßsonde zur Durchführung des Verfahrens.

Durch Rohrbrüche oder auch durch undichte Abschnitte im Bereich der Wasserleitungen oder aber im Bereich der Wasserverbraucher treten teils erhebliche Verluste auf. Da die Leitungen der Wasserversorgungsnetze in der Regel unterirdisch verlegt sind, können Leckverluste nur selten sofort erkannt werden, und zwar insbesondere dann nicht, wenn die einzelnen Leckverluste nicht übermäßig groß sind. Solche Leckverluste sind insbesondere jene Wassermengen, welche sich aus der Differenz der gelieferten Wassermenge und der den Verbrauchern in Rechnung zu stellenden Wassermenge ergeben.

Aus der EP-A-0 009 263 sind bereits ein Verfahren zur Leckortung in vermaschten Leitungsnetzen sowie ein dabei verwendbarer Meßschacht bekannt geworden. Hier werden Kontrollstellen aufgebaut, an denen die Durchfließeigenschaften gleichzeitig und jeweils über eine bestimmte kurze Zeit für das ganze Leitungssystem regelmäßig und gleichzeitig erfaßt werden können. An allen Kontrollstellen ist ein eigens dafür vorgesehener Kontrollschacht herzustellen, wobei dadurch auch die bestehenden Leitungen unterbrochen werden müssen, um Schieber, Meßeinrichtungen oder Wasserzähler einsetzen zu können. Mit einer derartigen Ausstattung und dem hier vorgesehenen Verfahren sind wohl erste Schritte zu einem eventuell großflächig zu ortenden Leckverlust zu machen, eine konkrete Lecksuche und eine exakte Fehlerortung ist damit jedoch nicht möglich. Auch ist als nachteilig zu werten, daß eine nachträgliche Ausstattung eines Wasserversorgungssystems mit einer solchen Einrichtung wohl schon aus Kostengründen nicht nur für die Erstellung, sondern auch für den laufenden Betrieb, scheitern wird.

Die EP-A-0 009 263 gibt ferner zum zugrundeliegenden Stand der Technik an, es sei zur Überwachung von Leitungen auf Leckverluste und zur Leckortung in diesen Leitungen bei Erdöl-Pipelines bekannt, Kontrollstellen im Verlauf der Leitungen einzurichten und die dort erfaßten Durchflußeigenschaften wie Durchflußmenge, Durchflußrichtung, Durchflußgeräusch, Fluiddruck oder dergleichen in bezug auf das den Leitungen zugeführte und aus diesen wieder abgeführte Fluid auszuwerten, um anschließend bei Feststellen eines Lecks den Leitungsverlauf zwischen zwei solchen Kontrollstellen mittels gezielter Meß- und Ortungsmaßnahmen zu orten und anschließend zu beseitigen. Solche Verfahren seien beispielsweise bekannt aus "Z. 3R International, 15. Jg. (Juli 1976) H. 7, S. 375-381", "Z. TÜ 11 (Juni 1970) Nr. 6, S. 213-215", Z. Öl - Zeitschrift für die Mineralölwirtschaft (1973) S. 2-6". (Die entsprechende EP-B-0 009 263 gibt für die letztgenannte Literaturstelle statt 1973 als Erscheinungsjahr 1979 an). Keine dieser Literaturstellen zeigt für sich ein Verfahren oder eine Meßsonde, um alle oben erwähnten Durchflußeigenschaften ermitteln zu können. Jede Literaturstelle betrifft vielmehr eine oder zwei der genannten Durchflußeigenschaften wie z.B. Menge und Druck oder Richtung und Druck oder dgl. Auf diese Weise lassen sich zwar mit viel Aufwand Lecks bei Erdöl-Pipelines ermitteln, nicht jedoch problemlos Lecks in Wasserversorgungssystemen, wo es zahllose Abzweigungen gibt. Gemäß der EP-A-0 009 263 ist dieses Problem dadurch gelöst worden, daß Unter-Leitungsnetze gebildet werden. Es besteht ein Bedarf an einem Verfahren und einer Meßsonde, mit dem sich in Wasserversorgungssystemen Lecks sicher orten lassen, ohne daß auf Unter-Leitungsnetze zurückgegriffen werden muß.

Die vorliegende Erfindung hat sich daher zur Aufgabe gestellt, ein Verfahren der eingangs genannten Art vorzuschlagen, durch welches eine exakte Analyse im Bereich von Wasserversorgungsanlagen einschließlich einer sicheren Ortung einer Leckstelle ermöglicht wird, und eine Meßsonde zur Durchführung des Verfahrens zu schaffen, die bei einfacher Montage verbesserte Meßmöglichkeiten gewährleistet

Erfindungsgemäß wird die Aufgabe durch ein Verfahren der eingangs genannten Art gelöst, bei dem die Meßsonden in regelmäßigen oder unregelmäßigen Abständen oder ständig eine Messung des Durchflusses, des Druckes und des Fließgeräusches an Meßstellen durchführen, um eine Analyse mittels eines Auswertegerätes auf der Basis eines Nullverbrauches vorzunehmen und mit den Daten bezüglich des Wasserdruckes, des Fließgeräusches sowie der Durchflußmenge und der Durchflußrichtung die Annäherung zu einer Leckstelle zu definieren, wobei ein Geräuschaufnehmer jeder Meßsonde einzeln an einen Geräuschkorrelator angeschlossen wird, um schlußendlich eine punktgenaue Leckortung zwischen zwei benachbarten Meßsonden durchzuführen.

Durch das erfindungsgemäße Verfahren können Verluste des kostbaren, vorwiegend aufbereiteten Trinkwassers, das teils in größeren Mengen in den Versorgungsleitungen verloren geht, auf ein Minimum reduziert werden. Der für die Installation, aber auch für die Durchführung der Messungen und Analysen entstehende Kostenaufwand bleibt in einer vertretbaren Größe. Die Abfrage kann zyklisch an vorgesehenen Terminals durch ein Lesegerät erfolgen. Jede Meßsonde kann auch unbeschaltet installiert sein und nur bei Bedarf bzw. bei Routinemessungen direkt an einen Datensammler angeschlossen werden. Die erforderliche Einschaltdauer - vornehmlich zu den beruhigten Tages- und Nachtzeiten - wird in der Regel dreißig bis sechzig Minuten nicht übersteigen. Wiederholungsmessungen zum gleichen Zeitpunkt durchgeführt vermitteln im Vergleich mehrerer Messungen eine sehr genaue Analyse des Wasserverlustes und vor allem des "Quasi-Nullverbrauches". Da mehrere Meßsonden in entsprechenden Abständen zueinander bzw. auch an Abzweigungen eingesetzt sind, kann durch die Aufzeichnung des Wasserdruckes und des Fließgeräusches sowie der Durchflußrichtung und Durchflußmenge die Annäherung zur Leckstelle definiert werden. Durch die integrierten Geräuschaufnehmer bzw. Tonaufnehmer und einen auf diese abgestimmten Geräuschkorrelator kann zwischen zwei Meßsonden dann punktgenau eine Ortung der Leckstelle erfolgen.

Bei dem Verfahren können beispielsweise alle Meßsonden mit einem Auswertegerät oder einem Datensammler über Terminals, Funk, Modem oder eine Verkabelung verbunden werden, wobei die Meßelemente der jeweils interessierenden Meßsonden abgerufen und ausgewertet werden, wobei Analysen des Wasserverlustes an den vermeintlichen Bereichen oder auch regelmäßig und manuell oder automatisch einschaltbar durchgeführt werden. Es sind also diverse Möglichkeiten vorhanden, die Daten direkt in einer Zentrale oder aber vor Ort abzurufen. Gerade in Winterzeiten, wenn Schachtdeckel, Schieberdeckel usw. festgefroren sind, kann dies von oberhalb des Erdbodens installierten Terminals aus problemlos durchgeführt werden. Dabei ist es ja nur wesentlich, exakt die Stelle des Leckverlustes zwischen zwei eingesetzten Meßsonden definieren zu können, damit nur ein kleiner Bereich aufgegraben werden muß, um schlußendlich das Leck zu reparieren.

Bei einer Montage von vielen Meßsonden ergeben sich auch sehr vorteilhafte Möglichkeiten beim erfindungsgemäßen Verfahren. Es wird dann vorgeschlagen, daß nach Art eines Zufallsgenerators abwechselnd und in sich wiederholenden Abständen verschiedene Bereiche des Wasserleitungsnetzes auf Wasserverlust und Leckstellen analysiert werden. Es ist dadurch eine ständige Beobachtung des Wasserversorgungsnetzes möglich, um dadurch Leckverlusten vorzubeugen oder auch massive Leckverluste schnell erkennen zu können. Durch eine Langzeitanalyse mit regelmäßig oder auch unregelmäßig sich immer wiederholenden Messungen kann sofort auf eine wesentliche Abweichung der Meßdaten von einer einzigen oder von mehreren Meßsonden reagiert werden.

Die Meßsonde zur Durchführung des Verfahrens ist dadurch gekennzeichnet, daß in die Meßsonde Meßelemente für die Ausgabe von Meßgrößen bezüglich des Durchflusses, des Drukkes und des Fließgeräusches integriert sind, wobei alle diese Meßelemente mittels Übertragung per Funk, Modem oder Kabelanschluß an Auswertegeräte oder einen Datensammler anschließbar sind.

Mit einer solchen Meßsonde ist es möglich geworden, engmaschig ein Wasserversorgungssystem mit Meßstellen zu versehen, wobei auch engmaschig Leckstellen ermittelt werden können. Bisher war es nur möglich, durch Einsatz verschiedenster Systeme eine Meßmethode nach der anderen anzuwenden, wobei mühsam auf eine annähernd zufriedenstellendes Ergebnis zu kommen war. Durch die Erfindung ist es möglich geworden, daß an allen Meßstellen auch alle erforderlichen Meßelemente zur Verfügung stehen, damit in Kombination aller Meßstellen und damit auch Meßverfahren rasch und punktgenau auf eine gesuchte Leckstelle hinzukommen ist.

Wenn gemäß der Erfindung in vorteilhafter Weise vorgeschlagen wird, daß die Meßelemente in eine hülsenartige Gewindespindel eingesetzt sind, wobei diese Gewindespindel in eine Anbohrschelle eingedreht oder eindrehbar ist, dann wird eine optimale Möglichkeit geschaffen, die Meßsonde jederzeit auch nachträglich auch in ein unter Druck stehendes Leitungssystem einzusetzen. Es bedarf dazu keines speziellen Schachtes, der aufgrund von notwendigen Schiebern usw. ständig zugänglich sein muß, sondern es genügt eine entsprechende Verkabelung beispielsweise zur Erdoberfläche hin, wo dann die weitere Verbindung durch Terminals, Funk, Modem oder eben mit einer kompletten Verbindung der Meßsonden untereinander verfolgt.

Eine vorteilhafte Maßnahme liegt darin, daß das Meßelement für den Durchfluß ein induktives Meßelement ist und daß die drei Meßelemente in die Gewindespindel integriert sind. Es können also auf kleinstem Raum alle notwendigen Meßelemente untergebracht werden, welche für eine optimale Messung und Auswertung vorteilhaft sind.

Da die Leitungssysteme bei der erfindungsgemäß vorgesehenen Montagemöglichkeit über eine Anbohrschelle in vollem Betrieb sind, also unter vollem Druck stehen, ist es vorteilhaft, wenn das Außengewinde der Gewindespindel ein Feingewinde oder eine Gewindeart ist, welches bzw. welche den Einbau der Meßsonde in unter Druck stehenden Wasserleitungen erlaubt. Dadurch ist es trotz des entgegenwirkenden Druckes leicht möglich, die Meßsonde einzudrehen.

Damit auch eine gute Angriffsmöglichkeit zum Einsetzen der Meßsonde gegeben ist, wird vorgeschlagen, daß die als Gewindespindel ausgebildete Meßsonde an ihrem einen Ende einen Werkzeugangriff nach Art eines Schraubenkopfes aufweist. Dadurch kann ein Werkzeug zur Übertragung des notwendigen Drehmoments in einfacher Weise angesetzt werden.

Durch Ausgestaltung der Meßsonde derart, daß an der Meßsonde ein Kabelauslaß für Meßleitungen vorgesehen ist oder eine Steckanordnung zum Anschluß eines oder mehrerer Auswertegeräte, kann diese direkt an eine Leitung angesetzt werden und demgemäß an irgend einer Stelle der Leitung verbleiben oder aber es kann auch eine Montage in einem bereits vorhandenen Schacht erfolgen. Es ergeben sich daher verschiedene Möglichkeiten der Datenweiterleitung.

Gerade durch die erfindungsgemäße Konstruktion der Meßsonde ergeben sich viele Möglichkeiten, die bisher nicht gegeben waren. Es wird daher vorgeschlagen, daß solche Meßsonden an einer Vielzahl von festlegbaren Meßstellen eines Wasserversorgungssystems installiert sind, vorzugsweise über Anbohrschellen, und in diesem verbleibend angeordnet sind. Nach einer einmaligen Montage, sei es bei einer Neuverlegung von Wasserleitungen oder aber bei einer Nachrüstung bestehender Leitungssysteme, steht anschließend eine optimale Möglichkeit zur ständigen Analyse des Wasserversorgungssystems zur Verfügung.

Ausführungsbeispiele der Erfindung werden in der nachstehenden Beschreibung anhand der Zeichnungen noch näher erläutert. Es zeigen:
- Fig.1: schematisch dargestellt eine erfindungsgemäße Meßsonde;
- Fig.2: eine Schrägsicht einer handelsüblichen Anbohrschelle, in welche die Meßsonde eingesetzt wird, teilweise aufgeschnitten dargestellt;
- Fig.3: schematisch dargestellt einen Leitungsbereich in einem Wasserversorgungssystem.

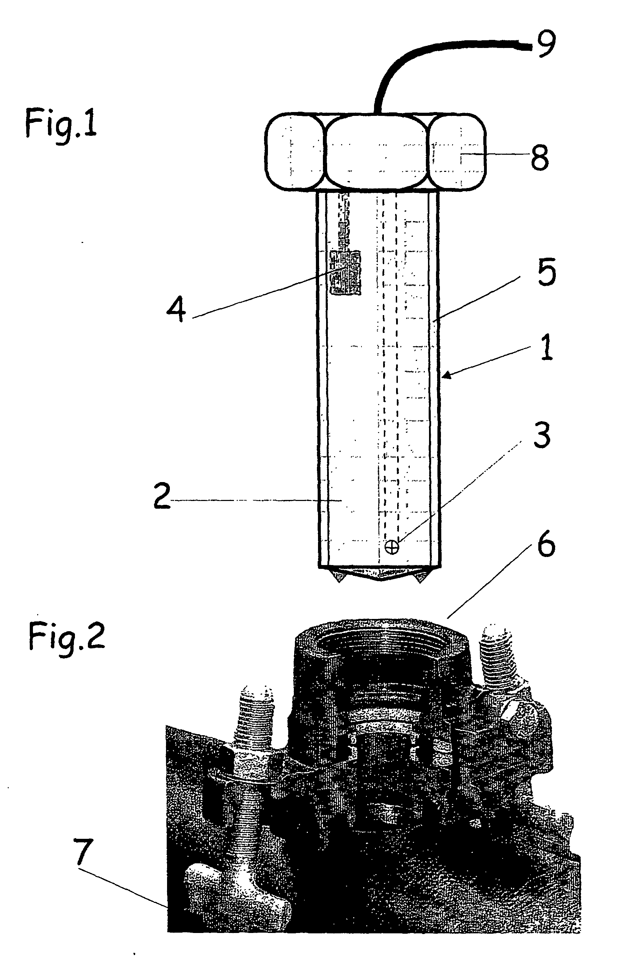

In eine in Fig.1 dargestellte Meßsonde 1 für Wasserversorgungsnetze sind Meßelemente, und zwar eine Sonde 2 für die Durchflußmessung, ein Drucksensor 3 und ein Geräuschaufnehmer 4, für die Ausgabe von Meßgrößen bezüglich des Durchflusses, nämlich der Durchflußmenge und -richtung des Wasserdruckes und des Fließgeräusches integriert. Diese Meßelemente sind mittels Übertragung über ein Terminal, per Funk, Modem oder Kabelanschluß an ein Auswertegerät oder einen Datensammler 12 oder bezüglich des Geräuschaufnehmers an einen Korrelator angeschlossen oder anschließbar. Das Wesentliche ist also, daß in einer Meßsonde alle Meßelemente integriert sind, welche für eine optimale Leckortung und somit für eine optimale Überwachung und Analyse eines Wasserversorgungsnetzes erforderlich werden. Es stehen also an allen Meßstellen Meßsonden zur Verfügung, welche alle benötigten Meßwerte liefern können.

Die Meßelemente sind in eine hülsenartige Gewindespindel 5 eingesetzt, wobei diese Gewindespindel 5 in eine Anbohrschelle 6 eingedreht oder eindrehbar ist. Es ist somit eine einfache Montage der Meßsonde 1 auch nach vielen Jahren möglich, falls ein Wasserversorgungssystem entsprechend ausgerüstet werden soll. Auf diese Weise ist es auch möglich, Schritt für Schritt ein Wasserversorgungssystem entsprechend mit Meßsonden auszubauen, da eine Montage mit Anbohrschellen jederzeit und an beliebigen Stellen durchführbar ist.

Vorteilhaft ist die Sonde 2 für die Durchflußmessung als induktiver Durchflußmesser ausgebildet. Der Drucksensor 3 und der Geräuschaufnehmer 4 können als an sich bekannte Baugruppen ausgeführt sein, welche jedoch in die Gewindespindel integrierbar sein müssen. Auf die exakte Ausführung der integrierten Meßelemente kommt es nicht an. Es können Meßelemente der verschiedensten Fabrikation und der verschiedensten Wirkungsweise sein, welche jedoch in Abstimmung aufeinander die für die notwendigen Analysen erforderlichen Werte liefern können.

Die Gewindespindel 5 ist natürlich mit einem Außengewinde versehen, wobei dieses Außengewinde vorteilhaft ein Feingewinde ist. Es könnte aber auch eine andere Gewindeart vorgesehen werden, welche einen Einbau der Meßsonde 1 in eine unter Druck stehende Leitung ermöglicht. Für die Handhabung der als Gewindespindel 5 ausgeführten Meßsonde 1 weist diese an ihrem einen Ende einen Werkzeugangriff 8 nach Art eines Schraubenkopfes auf. Im Rahmen der Erfindung kann natürlich auch jede andere Variante eines Werkzeugangriffes vorgesehen werden. Falls eine besonders schlanke Ausführung einer Meßsonde erforderlich ist, wäre auch ein Innenwerkzeugangriff an dem einen Ende der Meßsonde denkbar, wobei dann Kabel oder Meßleitungen 9 auch seitlich hinausgeführt werden könnten.

An der Meßsonde 1 ist ein Auslaß für die Meßleitung(en) 9 vorgesehen. Dieses Kabel kann beispielsweise zu einem oberirdischen Terminal geführt werden. Dadurch wäre auch ein ständiger Zugriff an die Meßdaten vor Ort möglich, ohne daß Schachtdeckel usw. zuerst angehoben werden müssen. Es ist aber auch möglich, an der Meßsonde 1 selbst oder eben in einem gut zugänglichen Terminal eine Steckanordnung zum Anschluß einer oder mehrerer Auswertegeräte oder Datensammler 12 vorzusehen.

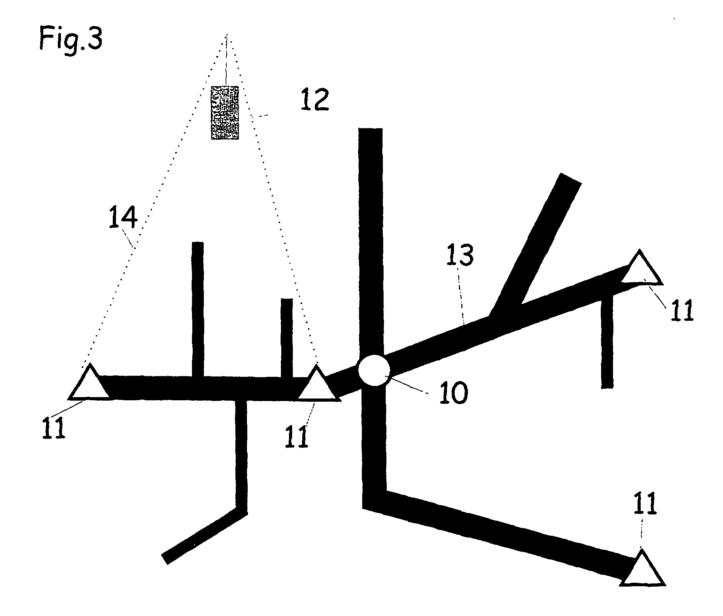

Wie Fig. 3 entnommen werden kann, werden Meßsonden 1 mit allen integrierten Meßelementen an Schlüsselstellen 10 und an einer Vielzahl von festlegbaren Meßstellen 11 eines Wasserversorgungsnetzes 13, insbesondere eines Trinkwasserversorgungsnetzes installiert. Wenn sie nicht bereits bei der Neuerstellung eines Wasserversorgungsnetzes angebracht werden, können diese Meßsonden 1 auch nachträglich durch die Montage von Anbohrschellen 6 angeordnet werden. Die Meßsonden 1 bilden also einen festen Bestandteil für die ständige Nutzung im Wasserversorgungsnetz 13 und sind in diesem verbleibend angeordnet. Über Meßleitungen 14 oder über Funk oder über ein Modem sind die Meßsonden 1 an ein Auswertesystem oder einen oder mehrere Datensammler 12 angeschlossen oder bei Bedarf anschließbar.

Zur Durchführung von Vergleichsmessungen für die Feststellung von Wasserverlusten und die Ortung der Leckstellen in Wasserversorgungssystemen unter Einsatz von Meßsonden 1 werden in regelmäßigen oder unregelmäßigen Abständen oder ständig eine Messung des Durchflusses und des Druckes unter gegebenenfalls teilweiser oder ständiger Zuschaltung des Geräuschaufnehmers 4 anhand ständig an Schlüsselstellen 10 und/oder Meßstellen 11 installierter Meßsonden 1 eine Analyse mittels eines Auswertesystems oder eines Datensammlers 12, wobei u.a. auch ein Geräuschkorrelator 12 vorgesehen ist, durchgeführt. Dadurch kann ein "Quasi-Nullverbrauch" festgehalten werden. Die Daten bezüglich des Wasserdruckes und des Fließgeräusches sowie der Durchflußmenge und der Durchflußrichtung definieren die Annäherung zu einer Leckstelle. Der Geräuschaufnehmer 4 in jeder Meßsonde 1 kann einzeln an einen Geräuschkorrelator angeschlossen werden, um schlußendlich eine punktgenaue Leckortung zwischen zwei benachbarten Meßsonden 1 und somit zwischen benachbarten Schlüsselstellen 10 undloder Meßpunkten 11 durchzuführen. Dazu bedarf es aber eines entsprechend geringen Abstandes der mit Geräuschaufnehmern 4 versehenen Meßsonden. Die Möglichkeit der Durchführung einer Geräuschkorrelation ist abhängig von der Art der Leitungen des Wasserversorgungssystems. Bei Kunststoffleitungen müssen die Meßsonden in kleineren Abständen vorhanden sein als bei Leitungen aus Gußrohren.

Alle Meßsonden 1 sind mit dem Auswertegerät oder dem Datensammler 12 über Terminals, Funk, Modem oder eine Verkabelung verbunden, wobei die Meßelemente der jeweils interessierenden Meßsonden 1 abgerufen und ausgewertet werden. Dadurch können Analysen des Wasserverlustes an den vermeintlichen Bereichen oder auch regelmäßig und manuell oder automatisch einschaltbar durchgeführt werden.

Gerade durch die besondere Ausbildung der Meßsonden 1 und das Meß- und Auswertungsverfahren bezüglich der gewonnenen Daten stehen noch weitere Möglichkeiten offen, das kostbare Gut Trinkwasser ständig zu überwachen. So wäre es möglich, nach Art eines Zufallsgenerators bei einem zentral angeordneten Auswertegerät oder Datensammler 12 abwechselnd und in sich wiederholenden Abständen verschiedene Bereiche des Wasserleitungsnetzes 13 auf Wasserverlust und Leckstellen zu analysieren.

Die Meßsonde 1 und das Verfahren, die hier beschrieben sind, sind vorteilhaft bei kommunalen Trinkwasserversorgungssystemen einzusetzen, da es dort immer wieder durch Lecks oder durch undichte Ventile in den Versorgungseinheiten selbst (Wohnhäuser, Büros, aber auch Industrie und Gewerbe usw.) zu teils ganz erheblichen Wasserverlusten kommt. Diese Leckstellen und somit Wasserverluste werden in der Regel auch nur dann entdeckt, wenn ein Wasserschaden sichtbar wird. Zu einer Messung genügt hier nicht allein ein eventuell auch an verschiedenen Orten, z.B. einer Hauptverzweigstelle, an den Hausanschlüssen usw. montierter Durchflußmengenmesser.

Es wird hier eine Verlustmeßanlage vorgeschlagen, welche in mehrfacher bis vielfacher Anordnung in einem Wasserversorgungssystem eingesetzt wird und auch dort eingesetzt bleibt. Es kann dann in relativ kleinen Leitungsabschnitten festgestellt werden, ob mehr als zu bestimmten Tages- oder Nachtzeiten üblich ein Wasserfluß bzw. eine Durchflußmenge - auch in einer bestimmten Durchflußrichtung - oder aber bestimmte Geräusche oder eine Druckänderung in der Leitung auf einen möglichen Wasserverlust hinweisen. Es kann also eine engmaschige Kontrollmöglichkeit für jedes Wasserwerk geschaffen werden. Je mehr Meßsonden in einem Wasserversorgungssystem angeordnet sind, um so genauer kann eine ständige Überwachung erfolgen.

Es sind also fixe Meßstellen in vielfacher Anordnung an den Hauptzubringerleitungen, an den Ringleitungen und auch an den Leitungen im engen Vernetzungsbereich angeordnet. Bei einer Neuverlegung von Leitungen können auch entsprechende Verbindungsleitungen mit eingelegt werden. Auf jeden Fall bleiben die Meßstellen immer an der Einsatzstelle vorhanden. Es sind auch Fernabfragen oder eine Verbindung z.B. über Modems zu einer zentralen Kontrollstation möglich, so daß gegebenenfalls nur eine Auswertestation bzw. ein Datensammler 12 für die Auswertung der Daten der Meßergebnisse notwendig ist. So ist es auch möglich, z.B. während der Nachtstunden in ganz speziellen Bereichen immer wieder zu kontrollieren, um feststellen zu können, ob eine Änderung der sonst üblichen Durchflußmenge vorliegt. Die ideale Anordnung ist natürlich, wenn alle Meßstellen von einer zentralen Kontrollstation aus beliebig miteinander kombiniert für Messungen herangezogen werden können.

Jede Meßsonde 1 kann auf einfachste Art und Weise in das Leitungssystem mittels Anbohrschellen eingebaut werden. Da ein solches Leitungssystem verschiedenste Rohrdimensionen hat, werden Anbauschellen vorgesehen, die in Zusammenwirken mit einem entsprechenden Bohrwerkzeug unter Druck oder in drucklosem Zustand angesetzt werden. Die Meßsonde 1 kann auch mittels diverser, auf die unterschiedlichen Anbohrschellen angepaßte Adapter eingeschraubt werden. Nach Einbau der Meßsonde 1 ist kein direkter Zugang zum Trinkwasser mehr möglich, so daß keine Gefahr für eine absichtliche oder auch unabsichtliche Trinkwasserverschmutzung gegeben ist.

Bei dem hier vorgeschlagenen Verfahren und der Meßsonde zur Durchführung des Verfahrens geht es im wesentlichen darum, durch Anordnung einer Vielzahl von Meßsonden eine ständige Kontrolle zu haben, die nicht nur auf die Hauptleitungen beschränkt ist, sondern vor allem bis in die enge Vernetzung - wo hauptsächlich ein besonderer Wasserverlust auftritt - hinreicht. In diesem Zusammenhang bedarf es natürlich besonders ausgestalteter Meßsonden, welche an den Leitungen fix montiert sein müssen und in einfacher und kostengünstiger Weise aufgebaut sein sollen, damit eine solche Vielzahl von Meßpunkten überhaupt kostengünstig zu verwirklichen ist. Wenn aber gerade Trinkwasser immer wertvoller wird und wenn darum Leckstellen oder fehlerhafte Ventile rasch aufgefunden werden müssen - bevor irgendwo an der Oberfläche Wasser austritt - dann sind in einem solchen Bereich auch wesentliche Investitionen zu tätigen.

## Patentansprüche

1. Verfahren zur Durchführung von Messungen für die Feststellung von Wasserverlusten und die Ortung der Leckstellen in Wasserversorgungssystemen unter Einsatz von Meßsonden, die in regelmäßigen oder unregelmäßigen Abständen oder ständig eine Messung des Durchflusses an Meßstellen (11) durchführen, um eine Analyse mittels eines Auswertegerätes (12) auf der Basis eines Nullverbrauches vorzunehmen und mit den Daten bezüglich der Durchflußmenge und der Durchflußrichtung die Annäherung zu einer Leckstelle zu definieren, **dadurch gekennzeichnet, daß** durch die Meßsonden (1) gleichzeitig auch der wasserdruck und das Fließgeraüsch gemessen werden, wobei ein Geräuschaufnehmer (4) jeder Meßsonde (1) einzeln an einen Geräuschkorrelator angeschlossen wird, um schlußendlich eine punktgenaue Leckortung zwischen zwei benachbarten Meßsonden (1) durchzuführen.

2. Verfahren nach Anspruch 1, **dadurch gekennzeichnet, daß** nach Art eines Zufallsgenerators abwechselnd und in sich wiederholenden Abständen verschiedene Bereiche des Wasserleitungsnetzes (13) auf Wasserverlust und Leckstellen analysiert werden.

3. Meßsonde zur Durchführung des Verfahrens nach Anspruch 1 oder 2, **dadurch gekennzeichnet, daß** in die Meßsonde Meßelemente für die Ausgabe von Meßgrößen bezüglich des Durchflusses, des Druckes und des Fließgeräusches integriert sind, wobei ein Geräuschaufnehmer jeder Meßsonde einzeln an einen Geräuschkorrelator angeschlossen wird, und, wobei alle diese Meßelemente mittels Übertragung per Funk, Modem oder Kabelanschluß an Auswertegeräte oder einen Datensammler (12) anschließbar sind.

4. Meßsonde nach Anspruch 3, **dadurch gekennzeichnet, daß** die Meßelemente in eine hülsenartige Gewindespindel (5) eingesetzt sind, wobei diese Gewindespindel (5) in eine Anbohrschelle (6) eingedreht oder eindrehbar ist.

5. Meßsonde nach Anspruch 4, **dadurch gekennzeichnet, daß** das Meßelement für den Durchfluß ein induktives Meßelement (2) ist und daß die drei Meßelemente in die Gewindespindel (5) integriert sind.

6. Meßsonde nach Anspruch 4 oder 5, **dadurch gekennzeichnet, daß** das Außengewinde der Gewindespindel (5) ein Feingewinde oder eine Gewindeart ist, welches bzw. welche den Einbau der Meßsonde in unter Druck stehenden Wasserleitungen erlaubt.

7. Meßsonde nach einem der Ansprüche 4 bis 6, **dadurch gekennzeichnet, daß** die als Gewindespindel (5) ausgebildete Meßsonde (1) an ihrem einen Ende einen Werkzeugangriff (8) nach Art eines Schraubenkopfes aufweist.

8. Meßsonde nach einem der Ansprüche 3 bis 7, **dadurch gekennzeichnet, daß** an der Meßsonde (1) ein Kabelauslaß für Meßleitungen (9) vorgesehen ist oder eine Steckanordnung zum Anschluß eines oder mehrerer Auswertegeräte.

9. Meßsonde nach einem der Ansprüche 3 bis 8, **dadurch gekennzeichnet, daß** solche Meßsonden (1) an einer Vielzahl von festlegbaren Meßstellen (11) eines Wasserversorgungssystems (13) installiert sind, vorzugsweise über Anbohrschellen (6), und in diesem verbleibend angeordnet sind.

## Claims

1. A method of carrying out measurements for detecting water losses and the location of the leakage points in water-supply systems using measuring probes which at irregular or irregular intervals or continuously carry out measurement of the flow at measuring locations (11) so as to undertake an analysis by means of an evaluating instrument (12) on the basis of zero consumption and to define with the data regarding the flow rate and the flow direction the approximation to a leakage point, **characterised in that** the water pressure and the flow noise are also measured simultaneously by the measuring probes (1), wherein a noise sensor (4) of each measuring probe (1) is connected individually to a noise correlator so as to carry out finally a pin-point leak location between two adjacent measuring probes (1).

2. A method according to Claim 1, **characterised in that** in the manner of a random generator alternately and at per se recurring intervals different regions of the mains water system (13) are analysed for water loss and leaks.

3. A measuring probe for carrying out the method according to Claim 1 or 2, **characterised in that** measuring elements for the output of measured variables in respect of flow, pressure and flow noise are integrated into the measuring probe, wherein a noise sensor (4) of each measuring probe is connected individually to a noise correlator, and wherein all of these measuring elements can be connected to evaluating instruments or to a data-acquisition means (12) by transmission via radio, modem or cable connection.

4. A measuring probe according to Claim 3, **characterised in that** the measuring elements are inserted into a sleeve-like threaded spindle (5), wherein this threaded spindle (5) is screwed or can be screwed into a spot-drilled pipe clamp (6).

5. A measuring probe according to Claim 4, **characterised in that** the measuring element for the flow is an inductive measuring element (2) and **in that** the three measuring elements are integrated into the threaded spindle (5).

6. A measuring probe according to Claim 4 or 5, **characterised in that** the outer thread of the threaded spindle (5) is a fine thread or a type of thread which makes it possible to install the measuring probe into pressurised water-supply lines.

7. A measuring probe according to any one of Claims 4 to 6, **characterised in that** the measuring probe (1) in the form of a threaded spindle (5) has at one end a tool engagement portion (8) in the manner of a screw head.

8. A measuring probe according to any one of Claims 3 to 7, **characterised in that** a cable outlet for measuring leads (9) is provided in the measuring probe (1) or a plug-in arrangement for the connection of one or more evaluating instruments is provided.

9. A measuring probe according to any one of Claims 3 to 8, **characterised in that** measuring probes (1) of this type are installed at a plurality of detectable measuring locations (11) of a water-supply system (13), preferably via spot-drilled pipe clamps (6), and permanently mounted therein.

## Revendications

1. Procédé pour effectuer des mesures, pour constater des fuites d'eau et localiser les points de fuite dans les systèmes d'alimentation en eau en utilisant des sondes de mesures, qui effectuent à des intervalles réguliers ou irréguliers ou en permanence une mesure du débit aux points de mesures (11) pour effectuer une analyse à l'aide d'un appareil d'exploitation d'eau (12) sur la base d'une consommation nulle et à définir les données concernant le débit et le sens du débit pour définir le rapprochement vers un point de fuite,
**caractérisé en ce que**
les sondes de mesures (1) mesurent en même temps également la pression de l'eau et le bruit d'écoulement,
un capteur de bruit (4) étant prévu à chaque sonde de mesure (1) en étant relié séparément à un corrélateur de bruit pour finalement effectuer une localisation de fuite, précise au point entre deux sondes de mesures voisines (1).

2. Procédé selon la revendication 1,
**caractérisé en ce qu'**
à la manière d'un générateur aléatoire on analyse en alternance et à des intervalles répétés, différentes zones du réseau de distribution d'eau (13) pour déterminer les pertes d'eau et les points de fuite.

3. Sonde de mesure pour effectuer le procédé des revendications 1 ou 2,
**caractérisée en ce que**
la sonde de mesure intègre les éléments de mesures pour fournir des grandeurs de mesures concernant le débit, la pression et le bruit de l'écoulement, un capteur de bruit étant raccordé à chaque sonde de mesures séparément à un corrélateur de bruit et tous ces éléments de mesures sont raccordés par une transmission radio, un modem ou une liaison par câbles à des appareils d'exploitation ou à un collecteur de données (12).

4. Sonde de mesure selon la revendication 3,
**caractérisée en ce que**
les éléments de mesures sont placés dans une broche filetée (5) en forme de manchon, cette broche filetée (5) étant vissée ou pouvant être vissée dans un collier de perçage (6).

5. Sonde de mesures selon la revendication 4,
**caractérisée en ce que**
l'élément de mesure pour un débit est un élément de mesures inductif (2) et les trois éléments de mesures sont intégrés dans une broche filetée (5).

6. Sonde de mesure selon la revendication 4 ou 5,
**caractérisée en ce que**
le filetage extérieur de la broche filetée (5) est un filetage fin ou une sorte de filetage permettant le montage de la sonde de mesure dans des conduites d'eau en pression.

7. Sonde de mesure selon l'une des revendications 4 à 6,
**caractérisée en ce que**
la sonde de mesures (1) réalisée sous la forme d'une broche filetée (5), comporte à l'une de ses extrémités une prise d'outils (8) à la manière d'une tête de vis.

8. Sonde de mesure selon l'une des revendications 3 à 7,
**caractérisée en ce que**
la sonde de mesures (1) comporte une sortie de câble pour des lignes de mesure (9) ou un connecteur pour le branchement d'un ou plusieurs appareils d'exploitation.

9. Sonde de mesure selon l'une des revendications 3 à 8,
**caractérisée en ce que**
de telles sondes de mesure (1) sont installées en un grand nombre de points de mesures fixés (11) d'un réseau de distribution d'eau (13), de préférence par l'intermédiaire de colliers de perçage (6) en étant installé dans ceux-ci d'une manière permanente.
